(19) Europäisches Patentamt
European Patent Office
Office européen des brevets

(11) **EP 2 965 417 B1**

(12) **EUROPEAN PATENT SPECIFICATION**

(45) Date of publication and mention
of the grant of the patent:
**15.05.2019 Bulletin 2019/20**

(51) Int Cl.:
***H02N 2/18*** *(2006.01)*

(21) Application number: **14708021.2**

(86) International application number:
**PCT/EP2014/054194**

(22) Date of filing: **04.03.2014**

(87) International publication number:
**WO 2014/135551 (12.09.2014 Gazette 2014/37)**

(54) **ELECTRICAL ENERGY GENERATOR AND METHOD FOR GENERATING ELECTRICAL ENERGY**

ELEKTRISCHER ENERGIEGENERATOR UND VERFAHREN UM ELEKTRISCHE ENERGIE ZU GENERIEREN

GENERATEUR D'ENERGY ELECTRIQUE ET PROCEDE POUR GENERER L'ENERGIE ELECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.03.2013 EP 13382074**

(43) Date of publication of application:
**13.01.2016 Bulletin 2016/02**

(73) Proprietor: **Deutecno, S.L.**
**28038 Madrid (ES)**

(72) Inventor: **YÁÑEZ VILLARREAL, David Jesús**
**E-05003 Ávila (ES)**

(74) Representative: **Balder IP Law, S.L.**
**Paseo de la Castellana 93**
**5ª planta**
**28046 Madrid (ES)**

(56) References cited:
EP-A1- 2 602 483    WO-A1-2007/071975
WO-A1-2012/066550    JP-A- 2006 132 397
US-A1- 2008 048 455

## Description

## TECHNICAL FIELD

The invention relates to the field of renewable energies, and more specifically to the field of electrical energy generation based on the motion of a fluid, using piezoelectric elements to convert mechanical energy into electrical energy.

## BACKGROUND OF THE INVENTION

Due to the drawbacks presented by non-renewable energies, such as those based on the combustion of fossil fuels or nuclear fuel, major efforts are being made to develop the so-called renewable energies, among which we find the ones based on using the motion of a fluid to drive a generator of electrical energy. For example, there are the so-called multi-bladed aerogenerators which make use of the wind to turn the rotor of an electrical generator. However, these aerogenerators, which have been enormously successful on a worldwide scale and which in many countries produce a major share of the electrical energy consumed, tend to have a large number of moving components, something which implies, among other things, relatively high maintenance costs due to the consumption of lubricants, wear and tear of components, etc. In some cases, the high speed of the blades can also represent a problem, since they can have an impact on bird fauna.

As an alternative to multi-bladed aerogenerators with rotary electrical generators, the use has also been proposed of generators based on the use of piezoelectric materials or elements for converting mechanical energy into electrical energy. For example, FR-2922607-A1 describes an electrical energy generator wherein a type of pole is supported on piezoelectric elements, in such a way that when the pole is driven or moved by the wind, the movement of the pole transforms into electrical energy through the piezoelectric elements.

At the same time, JP-2006-132397-A describes the use of the Karman vortices in water to make a column that is introduced in water vibrate, and which is coupled to a piezoelectric plate. Similarly JP-2006-226221-A and WO-2012/017106-A1 refer to electrical generators based on Karman vortices.

For example, WO-2012/017106-A1 (corresponding to EP-2602483-A1) describes an electrical energy generator based on wind having a pole made up of a plurality of elements with high electromechanical coupling, a term which encompasses piezoelectric elements. The pole has a section and configuration that deliberately transforms the flow of stationary and laminar air into a turbulent flow, wherein eddies or vortices appear in a synchronised manner throughout the length of the pole. Therefore, the pole sustains two forces, namely, a drag force in the same direction as the wind, and a lift force that is produced in a direction perpendicular to the direction of the wind and whose sense changes sign, with a frequency that corresponds to the frequency of the appearance of new vortices and which can be calculated using the following formula:

$$F_v = S * V / d,$$

where $F_v$ is the frequency of vortex appearance, V the velocity of the air, and d the characteristic dimension of the pole, for example, in the case of a pole having a circular cross-section, the pole diameter. S is Strouhal's dimensionless number. Given that the air's velocity increases with height, according to the Hellmann exponential Law, to achieve synchronisation in the appearance of vortices, WO-2012/017106-A1 proposes an increase in pole diameter with the increase height.

WO-2012/017106-A1 does not explain in detail how the movement of the pole is converted into electrical energy. Nonetheless, given that it indicates that the pole itself is made up of a plurality of elements with high electromechanical coupling, it is understood that it is the swaying of the pole itself that deforms the elements thereby generating a power differential between the surfaces of the affected elements. At the same time, WO-2012/017106-A1 proposes active modulation of Young's modulus or the pole's elasticity modulus, by varying the electrical voltages to which the elements with high electromechanical coupling are subjected.

US-2008/048455-A1 relates a system including a bluff body adapted to interact with a fluid to generate a series of von Karman Vortex oscillating pressure gradients so as to convert part of the energy of the fluid into mechanical motion of the bluff body. The motion of the bluff body is converted into electrical energy. Reference is made to a gyroscopic electrical generator as the means for carrying out this conversion. The use of piezoelectric material is mentioned in relation to the adjustment of a support arm, used to support a spherical bluff body, and in relation to an electromechanical support arm employing a material such as a piezoelectric polymer which converts mechanical deformation into electricity.

WO-2012/066550-A1 likewise relates to energy conversion from fluid flow with an oscillator assembly including a main body, the movement of which is used to generate electrical energy. An operative flow affecting unit is used to adapt the interaction between the flow and the main body, to enhance energy capture. Piezoelectric material is mentioned as an option for converting mechanical strain into electric current or voltage.

On the other hand, CN-201818437-U describes an electrical energy generator for powering low power consumption sensors and systems, and which is based on a rotor with blades. The rotor is provided with magnets which turn with the rotor and interact with magnets coupled to piezoelectric elements, in such a way that the turning of the rotor translates into a force on the piezoelectric elements, transforming the turning of the rotor into electrical energy.

JP-2006-158113-A describes another mechanism for converting mechanical energy into electrical energy, using a piezoelectric element associated to a magnet.

## DESCRIPTION OF THE INVENTION

Although renewable energies are attractive from an environmental point of view, they have not always been successful from an economical point of view. Therefore, to increase their economic attractiveness, it is important to enhance their efficiency, for example, in terms of the performance of the installations compared to their overall cost, which includes the cost of manufacture, cost of installation and cost of maintenance.

In the case of an aerogenerator by vortex resonance, such as the one disclosed in WO-2012/017106-A1, and having a wind energy capture element in the form of a pole, which can reach a height of several metres or more, the oscillation of the pole to one side and the other according to the appearance of the vortices occurs at a relatively low frequency. However, the efficiency of the conversion of mechanical energy into electrical energy by means of piezoelectric elements is higher when the piezoelectric elements are subjected to deformations that oscillate at the natural oscillation frequency of the piezoelectric elements. Therefore, it has been considered that it could be advantageous for the generation of electrical energy by means of the piezoelectric elements to occur at a higher frequency than the frequency of the pole's oscillation.

The invention relates to an electrical energy generator as defined in claim 1, and to a method as defined in claim 5.

In some embodiments the electrical energy generator comprises a capture element, for example, in the form of a post, pillar or pole, configured to be situated in a fluid, for example, in the air, although there are also other possibilities, such as water. The fluid may have a substantially stationary and laminar flow, a characteristic that is normally presented by wind. The capture element is configured so that when said fluid is moved, vortices are generated in said fluid in such a way that a lift force is generated on said capture element, for example, as described in JP-2006-226221-A, JP-A-2006-132397-A, or WO-2012/017106-A1 or WO-2007/071975-A1.

The electrical energy generator comprises additionally at least one generator piezoelectric element, for example, several generator piezoelectric elements, such as a large number of said generator piezoelectric elements; in this context, the term "generator piezoelectric element" is used to refer to the piezoelectric elements having as their main function, or one of their main functions, to generate electrical energy based on movements in the capture element or related elements, such movements being induced by the lift force.

In these embodiments, the capture element is associated to the generator piezoelectric element so that, when the generator is in an electrical energy generation mode (wherein the vortices generate a lift force that alternates between one direction and its opposite, with a frequency that is proportional to the velocity of the fluid's flow, and which presents sufficient amplitude), repetitively and in response to the lift force,

(a) the generator piezoelectric element is elastically deformed in such a way that said generator piezoelectric element passes from a first configuration to a second configuration, accumulating energy (basically, in the form of elastic potential energy) (for example, this deformation can comprise the bending of a piezoelectric element with a substantially laminar or flat shape, for example, in the form of a plate, lamina or cantilever, which can have one end or side fixed to a base and the opposite side or end free); and
(b) subsequently, the generator piezoelectric element is released in such a way that said generator piezoelectric element returns to its first configuration in an oscillating manner, converting part of said elastic potential energy into electrical energy. Steps (a) and (b) can be repeated, for example, one or twice for every period of oscillation of the capture element.

In general, the capture element can have the shape of a pillar, post, or pole, and can present considerable dimensions, for example, a length of several metres or tens of metres, or even hundreds of metres, and can have one fixed end and another free end arranged to move in an oscillating manner, driven by the lift force. The frequency of oscillation or swaying of the capture element can be very low, for example, of just a few Hz or even less. Consequently, and due to the intrinsic characteristics of the piezoelectric elements, during the deformation from the first configuration to the second configuration, the energy that the capture element transfers to the piezoelectric element transforms into very little electrical energy, and is for the most part accumulated in the generator piezoelectric element in the form of elastic potential energy. Then, upon release, the piezoelectric element returns to its first configuration, but because it is released it does so oscillating at its natural oscillation frequency, which allows for a high performance in the conversion of elastic potential energy into electrical energy.

The generator can have a large number of generator piezoelectric elements; basically, the number, size and capacity of each generator piezoelectric element can be selected in order to guarantee on the one hand maximum use of the energy captured by the capture element in normal operating conditions, and on the other hand to minimise costs, taking into account the prices for generator piezoelectric elements. For example, a large-sized capture element can be associated, in the manner described, to multiple generator piezoelectric elements, for example, to hundreds or thousands of generator piezoelectric elements.

In at least some embodiments of the invention, the generator piezoelectric elements do not only store during their functioning part of the energy in the form of vibrational kinetic energy and elastic potential energy: also, given their intrinsically high capacitance, they can store part of the energy in the form of electrical capacity. For this reason, their performance is affected by the working electrical voltage at which they are made to function. The generator of the invention can comprise or be associated to a control and regulation sub-system that also regulates said working voltage.

For example, the generator piezoelectric elements that are flat or substantially flat or similar store elastic potential energy when they are deformed. When they are allowed to oscillate freely, this potential energy is transformed into:

- losses: part of the energy is transformed into heat through viscous losses of the material or of the air, or, despite their high impedance, part of the electrical load crosses the piezoelectric element through the so-called leakage currents transforming into heat through the Joule effect.
- electrical energy: this energy is extracted and evacuated outside, for example, by rectifying it (for example, with a diode bridge or similar).
- kinetic energy (which will be at its maximum when the generator piezoelectric element passes through the centre of oscillation, the point at which the piezoelectric element is not deformed). In each cycle of oscillation this kinetic energy decreases (the piezoelectric element gradually stops) due to the fact that it has been transforming into electrical energy and into losses.

The number of cycles that occur during the oscillation of the generator piezoelectric element affects its performance. For example, a higher number of cycles will produce an increase in losses due to friction with the air or due to the viscosity of the material itself. Both the number of cycles and the leakage currents are affected by the voltage that the generator piezoelectric element presents on its surfaces. A high voltage will increase the leakage currents and with these, the losses through the Joule effect will also increase. In this way, for each operating regime there will be a working voltage that maximises the electrical energy extracted; it is a matter of finding an ideal compromise between the losses due to leakage currents and losses due to friction.

In some embodiments of the invention, the generator comprises additionally at least one first magnet associated to the capture element in such a way that the first magnet is displaced according to said lift force (in other words, the first magnet can be joined to a structure that is moved with the swaying motion of the capture element which results from the lift force generated by the vortices); and at least one second magnet associated to said, at least one, generator piezoelectric element in such a way that a movement of the second magnet produces a deformation of the generator piezoelectric element, for example, bending a piezoelectric element having a shape that is substantially laminar or a shape like a cantilever or similar. Said, at least one, first magnet and said, at least one, second magnet will be associated to each other and to the generator piezoelectric element in such a way that when the first magnet is moved repetitively in response to said lift force, steps (a) and (b) indicated above will be carried out repetitively due to the interaction between the first magnet and the second magnet. In other words, the first magnet provokes a movement of the second magnet in such a way that said deformation of the piezoelectric element occurs, for example, a bending of the piezoelectric element in respect of a fixed point thereof, and subsequently the piezoelectric element returns to its initial configuration in an oscillating manner, producing electrical energy. Through use of the magnets it is possible to avoid direct contact between the moving parts, thereby reducing their wear and tear.

In some embodiments of the invention, said first magnet and said second magnet will be disposed so that the poles of the same sign are facing each other, producing repulsion between said magnets. It also works by facing the poles of different signs and operating with attraction between the magnets, but it seems that it could be more practical or efficient to operate with repulsion. By operating with repulsion, a movement of the first magnet towards the second magnet can cause the deformation of the generator piezoelectric element, until the moment at which the elastic forces accumulated in the generator piezoelectric element exceed the force of repulsion between the magnets, at which moment the generator piezoelectric element returns to its original configuration in an oscillating manner.

In some embodiments of the invention said, at least one, generator piezoelectric element has a substantially flat configuration, and one side fixed to a base, leaving the other side free. In this way, the generator piezoelectric element can oscillate in respect of said side that is fixed in the base, in the manner of a springboard or cantilever, once it has been released in step (b) described further above.

In some embodiments of the invention, the generator of electrical energy comprises a plurality of said generator piezoelectric elements. The generator piezoelectric elements can, for example, be disposed on a curved base, so as to interact with parts of the capture element that move following a curved trajectory, corresponding to the oscillation of the capture element in respect of its base.

In some embodiments of the invention, the capture element comprises at least one part of piezoelectric material, said piezoelectric material being disposed so as to allow a modification of the natural oscillation frequency of the capture element. The capture element can be of a post or pillar type. In some embodiments of the invention it has a substantially circular cross-section so that it can function irrespective of the direction of the wind, and/or a width or radius that increases according to the distance from its base, in order to allow the vortices to appear in a synchronised manner throughout the capture element, despite the fact that the speed of the wind increases with height. In some embodiments of the invention, the capture element has one end immobilised, for example, fixed to a base, for example, in the ground or in a structure disposed in the sea, and can have the other end free, in such a way that it can oscillate freely. In order to maximise the energy capture from the movement of the fluid that surrounds the capture element, it is preferable for the natural oscillation frequency of the capture element to correspond to the frequency of appearance of the vortices. Given that this frequency, for a particular capture element, depends on the speed of the wind, it can be desirable to be able to vary the natural oscillation frequency of the capture element according to the wind's speed. This can be done by acting on one or more piezoelectric elements associated to the capture element, for example, by acting on said part of piezoelectric material. Said part of piezoelectric material can, for example, be disposed in the form of a sheath that surrounds an elastic or flexible core of the capture element, for example, in a zone near the base of the capture element, for example, in the lower part of the capture element. Actuation on these piezoelectric elements, for example, on the part of piezoelectric material, can be achieved by applying a voltage to said piezoelectric material, it thereby being possible to change its voltage. The actuation can be done on the basis of real wind speed measurements, for example, obtained through the use of one or more anemometers, and/or based on the detection of the oscillation frequency of the capture element.

For example, for a solid bar, its natural oscillation frequency is:

$$\omega = (((I*E*K^4)/d)-a^2)^{(1/2)}$$

where

$E$ is Young's modulus, $I$ is the section inertia moment, $d$ is the density of the bar per unit of length, $K$ is the mode of spatial oscillation (the 1st modulus and its harmonics) and a is a damping constant. The more a structure is dampened (in other words, the more energy is extracted from it in the form of viscous losses, friction or, in the case of piezoelectric elements, when electrical energy is extracted from them), the lower their natural oscillation frequency. The natural oscillation frequency of any structure depends on the damping to which it is subjected. Consequently, the more electrical power is extracted from the generator, the less its natural oscillation frequency, unless this is offset by tensioning the piezoelectric material that forms part of the structure, for example, of the structure of the capture element. Therefore, the natural oscillation frequency of the capture element is affected by both the damping that occurs from extraction of the electrical energy via the generator piezoelectric elements, and by the voltage that is applied to the piezoelectric material that forms part of the capture element itself. As a result, it can be advantageous to have a control system that regulates the natural oscillation frequency of the capture element by acting on both the extraction of the electrical energy from the generator piezoelectric elements, and on the piezoelectric material that forms part of the capture element.

In some embodiments of the invention, the capture element has a height of one metre or more, for example, of more than 2, 5, 10, 15, 60, 100, or 200 metres. In principle there is nothing to prevent it from having a height of even more than 300 metres; the person skilled in the art can choose an appropriate height based on aspects such as, for example, manufacturing, transport and installation costs.

In some embodiments of the invention, the capture element is or comprises an essentially hollow, rigid and light structure, which, inside, can include reinforcement elements, such as, partition walls and/or reinforcement ribs. In some embodiments of the invention, the capture element, or at least the upper and/or major part thereof, is, at least to a substantial extent, made of materials that include fibreglass and/or epoxy resin and/or polyester resin and/or polyamide resin. In some embodiments of the invention, the capture element can incorporate carbon fibre, aluminium or even steel, especially in points which require increased mechanical performance.

In some embodiments of the invention, the capture element is configured to have a natural oscillation frequency of between 0.01 Hz and 20 Hz, such as between 0.01 Hz and 3 Hz.

In some embodiments of the invention, the electrical energy generator comprises:

a capture element configured to be situated in a fluid (for example, in the air, although other possibilities are also contemplated, such as water; the fluid can have a substantially stationary and laminar flow, a characteristic which is normally presented by wind) and configured so that, when said fluid is moved, vortices are generated in said fluid in such a way that a lift force is generated on said capture element (for example, as described in JP-2006-226221-A, JP-A-2006-132397-A, or WO-2012/017106-A1); and

at least one generator piezoelectric element (for example, several generator piezoelectric elements; in this context, the term "generator piezoelectric element" is used to refer to the piezoelectric elements having as their main function, or one of their main functions, to generate electrical energy on the basis of movements in the capture element or related elements, such movements being induced by the lift force).

In some embodiments, the capture element comprises, preferably in correspondence with a portion adjacent or close to a base of the capture element, an elastic core surrounded by piezoelectric material, and means for applying voltage to said piezoelectric material so as to modify the natural resonance frequency of the capture element. In this way, the natural oscillation frequency of the capture element can be adapted to the frequency of appearance of the vortices, which is something that improves the capturing of energy. The combination of an elastic core surrounded by piezoelectric material has been considered to be especially appropriate for allowing efficient control of the natural oscillation frequency.

In some embodiments of the invention, said piezoelectric material is situated in the lower half of the capture element, for example, close to the base, for example, in the bottom 25% or 10% of the capture element. In this way, it is possible to facilitate both the establishment of electrical connections with a control sub-system, and the efficiency of the effect that the piezoelectric material has on the natural oscillation frequency of the capture element. Also, the location of said piezoelectric material can serve to facilitate actions of maintenance, updating and modernisation of sub-systems, etc.

Other embodiments of the invention relate to an electrical energy generator, which comprises:

a capture element, such as a high mast or post, configured to be situated in a fluid, such as air, and configured so that, when said fluid is moved, said capture element generates vortices in said fluid in such a way that a lift force is generated on said capture element so as to generate a first repetitive movement of at least part of said capture element, said repetitive movement having a first frequency, such as a frequency of less than one Hz or a few Hz, such as a frequency in the range of between 0.01 Hz and 20 Hz, such as in the range between 0.01 Hz and 3 Hz; and at least one generator piezoelectric element. The capture element and said at least one generator piezoelectric element are arranged so that said first repetitive movement of at least part of said capture element repetitively triggers an oscillation of said at least one piezoelectric element, said oscillation is at a second frequency substantially higher than said first frequency, such as at a frequency corresponding to the natural frequency of oscillation of the piezoelectric element, and/or a frequency of more than 30, 50, 100 or 300 Hz; in many embodiments of the invention, the second frequency is below 3000 Hz. By having the generator piezoelectric element oscillating at a higher frequency, such as at its natural frequency of oscillation or at least closer to said natural frequency of oscillation than the first frequency, the efficiency of the conversion into electrical energy that takes place at the generator piezoelectric element is enhanced. Thus, for example, in spite of the rather low frequency at which a capture element such as a rather high pole or mast or similar can move, such as sway, the conversion of the mechanical energy into electrical energy by means of piezoelectric elements can take place at a frequency that allows for efficient conversion.

In some embodiments of the invention, said first repetitive movement of at least part of said capture element is arranged to trigger said oscillation by displacement followed by release of a moveable portion of said at least one generator piezoelectric element, such as by deforming said generator piezoelectric element by displacing part of it, for example, by bending or otherwise deforming it. In some embodiments of the invention, the displacement is caused by contactless means, thereby reducing the risk for wear. In some embodiments of the invention, the displacement is caused by magnetic means, such as by repulsion between magnets. Repulsion between magnets can serve to enhance the efficiency.

In some embodiments of the invention, the capture element includes at least a first part (such as an upper part) and a second part (such as a lower part), said first part being arranged so that said lift force acts on said first part, said second part being more flexible and/or more elastic than said first part and being arranged to connect said first part to a base, so that when said lift force acts on said capture element, said capture element sways with regard to said base. This arrangement can provide for a reduction of costs as a less costly material and/or design can be used for the first part than for said second part, said second part having to be designed to make sure that the displacement or swaying of the capture element be enough to trigger the generator piezoelectric elements as needed for an adequate energy production, while being resistant enough to withstand the forces generated by the wind and by the swaying of the capture element, for a long time including periods with high wind speeds. Regarding the first part, what is primarily important is often its shape and size, in combination with a sufficiently low weight and sufficient resistence to wear, including weather-induced wear. Thus, using two parts with different characteristics in what regards, for example, elasticity and/or flexibility, can be an advantage and helpful to reduce costs. The second part may be made of a different material or of different materials than said first part, or if made of the same materials, it may comprise them in proportions different from the proportions used for the first part. The first part is preferably made of a lightweight material and/or the first part is substantially hollow.

In some embodiments of the invention, the at least one generator piezoelectric element comprises a plurality of generator piezoelectric elements extending radially in different directions, for example, in what regards their projection on a horizontal plane. As the wind can blow in different directions, it is advantageous to arrange the generator piezoelectric elements so as to optimise the number of them that are likely to be triggered and operated to produce electrical energy at any given time. For example, arranging the generator piezoelectric elements in parallel rows may imply that when the movement of the capture element is in a plane parallel with said rows, no electrical energy will be produced. One way of avoiding this problem can be by arranging the generator piezoelectric elements so that they extend radially in different directions from some kind of centre point of the system, for example, in relation to a vertical axis of the capture element. The magnets or other actuator elements that serve to interact with the generator piezoelectric elements can be arranged accordingly, or just at some specific positions. The radial arrangement of the generator piezoelectric elements implies that a very large proportion of them may be triggered, such as elastically deformed and subsequently released, or triggered to oscillate, during each cycle of movement of the capture element in response to the lift force (actually, in the case of a movement towards one side and then towards the other side, maybe two or four times during each cycle of movement), independently of the direction of the wind and of the orientation of the vertical plane in which the capture element is moving or swaying. The radial distribution can, for example, be regular. For example, approximately 90 generator piezoelectric elements can be arranged extending into different radial directions, with a spacing of approximately 4 degrees between adjacent generator piezoelectric elements.

In some embodiments of the invention, a plurality of said generator piezoelectric elements are arranged on at least one support, said generator piezoelectric elements having free ends, such as upper ends or surfaces, that are curved. This can be especially advantageous when the generator piezoelectric elements are arranged extending in the radial direction. These curved ends or surfaces can accommodate for the swaying of the capture element, so as allow for a relatively reduced distance between the parts associated to the capture element that are used to trigger the generator piezoelectric elements, while on the other hand avoiding an undesired impact between parts associated to the capture element and the generator piezoelectric elements.

In some embodiments of the invention, a plurality of the generator piezoelectric elements are arranged on a first support and another plurality of the generator electric elements are arranged on a second support placed above the first support, the generator piezoelectric elements arranged on the first support having free ends (such as upper ends) that are curved with a first radius of curvature and the generator piezoelectric elements that are placed on the second support having free ends (such as upper ends) that are curved with a second radius of curvature larger than said first radius of curvature. That is, the free ends of said generator piezoelectric elements on a first level may have a more pronounced curvature than the free ends of the generator piezoelectric elements on another level, such as a higher level. This arrangement can be especially useful in cases in which the supports are arranged at different distances or heights over a point where the capture element is fixed or anchored so that it sways, for example, towards one side and towards the opposite side, with regard to said point where it is fixed. In such a case, actuator elements or magnets fixedly associated with the capture element will follow its swaying or "inverted pendular" movement and follow curved trajectories, the radius of curvature of the trajectory increasing with height. Thus, arranging the generator piezoelectric elements accordingly can facilitate the interaction between the actuator elements or magnets and the generator piezoelectric elements.

In some embodiments of the invention, the generator comprises a plurality of said generator piezoelectric elements, arranged in a plurality of groups of generator piezoelectric elements, said groups being offset with regard to each other in the vertical direction, for example, arranged on different support surfaces one above the other. This arrangement is easy to implement and can provide for a large amount of piezoelectric material, arranged in a way so as to be triggered in response to the lift force acting on the capture element, for example, in response to a swaying movement of the capture element. In some embodiments of the invention, these groups of generator piezoelectric elements can be separated from each other such that actuator elements can be displaced (due to a relative displacement between the actuator elements and the generator piezoelectric elements generated by said lift force) between these groups of generator piezoelectric elements, so as to trigger oscillation of the generator piezoelectric elements in response to said lift force acting on the capture element. In some embodiments of the invention, the generator piezoelectric elements are arranged differently in one of said groups than in another one of said groups, so that the ratio between the electrical power produced by the one of said groups and the electrical power produced by the other one of said groups varies in accordance with the direction of the wind. By using groups with different orientation or arrangement of the generator piezoelectric elements, a certain compensation between the groups can be achieved, so that when the wind blows in a direction that implies a low power production by one of said groups, a high power production can be expected from another of said groups. For example, if one of said groups consists of a number of generator piezoelectric elements extending in one direction, another group can consist of a number of generator piezoelectric elements extending in another direction, so that for a certain direction of the wind, one group will have a higher power production efficiency than the other, and the other way around for a different direction of the wind.

In some embodiments of the invention, the electrical energy generator comprises:

a capture element configured to be situated in a fluid and configured so that, when the fluid is moved, it generates vortices in said fluid in such a way that a lift force is generated on said capture element;

at least one generator piezoelectric element;

wherein the capture element is associated to the generator piezoelectric element so that, when the generator is in a mode of electrical energy generation, the capture element, repetitively and in response to the lift force, directly or indirectly actuates on the generator piezoelectric element in such a way that said generator piezoelectric element produces electrical energy;

wherein the capture element includes at least a first part (such as an upper part) and a second part (such as a lower part), said first part being arranged so that said lift force acts on said first part, said second part being more flexible and/or more elastic than said first part and being arranged to connect said first part to a base so that when said lift force acts on said capture element, said capture element sways with regard to said base. Said first part can be much larger than said second part. Advantages with this approach have been explained above.

Another aspect of the invention relates to a method for generating electrical energy, which comprises the steps of:

placing a capture element in a fluid to generate vortices in said fluid in such a way that a lift force is generated on said capture element which generates an oscillating movement of the capture element, for example, a swaying of the capture element in respect of a fixed base of the capture element, in such a way that said oscillating movement of the capture element, repetitively,

(a) elastically deforms at least one generator piezoelectric element in such a way that said generator piezoelectric element passes from a first configuration to a second configuration, accumulating energy (in the form of elastic potential energy) (for example, this deformation may consist of a bending of a piezoelectric element having a substantially laminar or flat shape); and

(b) subsequently, releases the generator piezoelectric element in such a way that said generator piezoelectric element returns to its first configuration in an oscillating manner, generating electrical energy, namely, converting part of said elastic potential energy into electrical energy.

In general, the capture element can have considerable dimensions, for example, a length of several metres or tens of metres, and oscillation frequency or swaying of the capture element can be very low, for example of just a few Hz or even less. Therefore, and due to the intrinsic characteristics of the piezoelectric elements, during the deformation from the first configuration to the second configuration, the energy that the capture element transfers to the piezoelectric element is converted into very little electrical energy, and is for the most part accumulated in the generator piezoelectric element in the form of elastic potential energy. Then, upon release, the piezoelectric element returns to its first configuration, but because it is released it does so oscillating at its natural oscillation frequency, which allows high performance of the conversion from elastic potential energy into electrical energy.

In some embodiments of the invention, magnets are used to convert the movement of the capture element into a deformation of the generator piezoelectric element. For example, a first magnet associated to the capture element can cause the displacement of a second magnet associated to the generator piezoelectric element in such a way that said deformation of the generator piezoelectric element occurs, for example, a bending of the piezoelectric element in respect of a fixed point thereof; subsequently, the generator piezoelectric element can return to its initial configuration in an oscillating manner, producing electrical energy.

In some embodiments of the invention, said, at least one, generator piezoelectric element can have a substantially flat configuration, with one side fixed in a base and another opposite side free, in such a way that in order to deform the generator piezoelectric element said opposite free side is moved, bending the generator piezoelectric element in such a way that said generator piezoelectric element accumulates elastic potential energy. In this way, the generator piezoelectric element can oscillate in respect of said side fixed in the base, in the manner of a springboard or cantilever, once it has been released in step (b) described further above.

In some embodiments of the invention, the method comprises the step of adapting the natural oscillation frequency of the capture element to the frequency of the appearance of vortices in the fluid, by means of

- modifying a voltage applied to a piezoelectric material forming part of the capture element, and/or
- modifying the electric power that is extracted from said, at least one, generator piezoelectric element.

In some embodiments of the invention, a capture element is used having a height of between 1 metre and 300 metres, or more, and having a natural oscillation frequency of between 0.01 Hz and 20 Hz, such as between 0.01 Hz and 3 Hz.

In some embodiments of the invention, the capture element oscillates with a first frequency, and the at least one piezoelectric element, after release in step (b), oscillates with a second frequency, higher than said first frequency, preferably at least 10 or 100 times higher, or more.

## BRIEF DESCRIPTION OF THE DRAWINGS

To complement the description and with a view to contributing towards a better understanding of the characteristics of the invention, according to a few examples of a practical embodiment thereof, a set of drawings is attached as an integral part of the description, which by way of illustration and not limitation, represent the following:

Figure 1 is a schematic view in elevation of some components of a generator according to a possible embodiment of the invention.

Figure 2 is a schematic view in cross-section of the capture element of said generator, and of the vortices that it generates in the surrounding fluid.

Figure 3 is a diagram that illustrates the relationship between the radius (R) of the capture element of the vortices and the height (H) above the ground, according to said possible embodiment of the invention.

Figures 4A-4C reflect schematically, a sequence of interaction between an actuator element and a generator piezoelectric element, according to a possible embodiment of the invention.

Figures 5A-5C reflect schematically, a sequence of interaction between another actuator element and a generator piezoelectric element, according to another possible embodiment of the invention.

Figures 5D and 5E schematically illustrate the variation of kinetic energy and amplitude, respectively, with time, for three different ways of triggering the generator piezoelectric element.

Figure 6 reflects schematically an electrical connection of a plurality of generator piezoelectric elements, to produce direct current.

Figure 7 reflects schematically a possible embodiment of a lower part of the generator of figure 1.

Figure 8 is a diagram of part of the control sub-system of a generator according to a possible embodiment of the invention.

Figure 9 is a schematic perspective view of an embodiment of the invention.

Figures 10 and 11 are schematic perspective views of details of the embodiment of the invention illustrated in figure 9.

## DESCRIPTION OF WAYS OF CARRYING OUT THE INVENTION

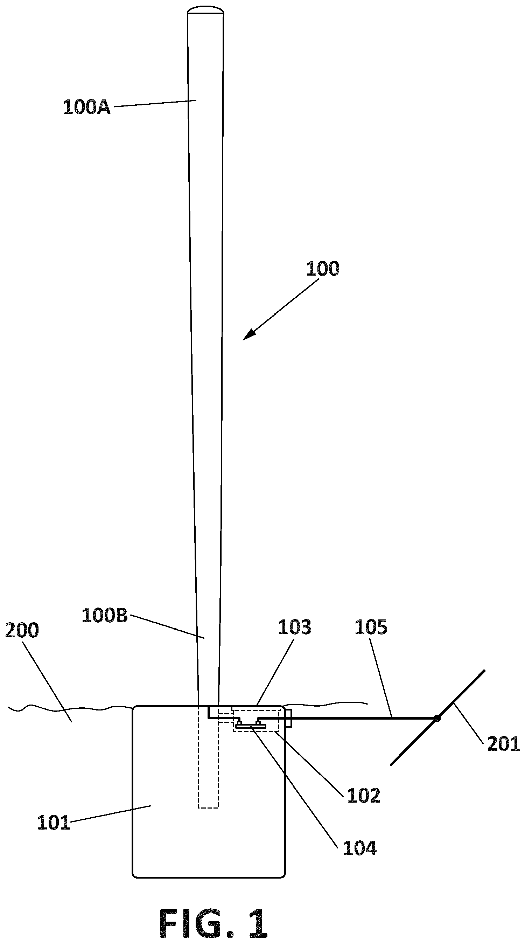

Figures 1-3 reflect schematically some aspects of a possible embodiment of the invention, and that said embodiment of the invention has in common with the aerogenerator described in WO-2012/017106-A1. The aerogenerator comprises a capture element 100 in the form of a pole which extends upwards from the ground 200, wherein the pole 100 is anchored by means of an anchoring base 101 which may be made of cement, concrete, or any other appropriate material. The anchoring base 101 may include a housing 102 which may be closed with, for example, a cover 103, and in which there is a control subsystem 104, which may be connected to a central control centre (not shown) via cable and/or via radiofrequency or any other means, and which may serve, on the one part, to apply control signals to the aerogenerator and, on the other part, to condition the generated electrical energy and direct it to conduction means 201 external to the aerogenerator, by means of a connection cable 105 or several connection cables. In some embodiments of the invention, the pole can comprise an upper or first portion 100A that can be relatively rigid, and a lower or second portion 100B that is more flexible or elastic than the first portion, so that the deformation of the pole during operation takes place substantially in relation to the lower portion 100B. In some embodiments, the first portion 100A makes up more than 50%, 75%, 90% or even more of the total extension of the pole in the vertical direction. One reason for this is that cheaper materials and layouts can be used for the first and major portion, whereas the second portion may require carefully selected materials and designs to provide for the required flexibility or elasticity, and for adequate duration.

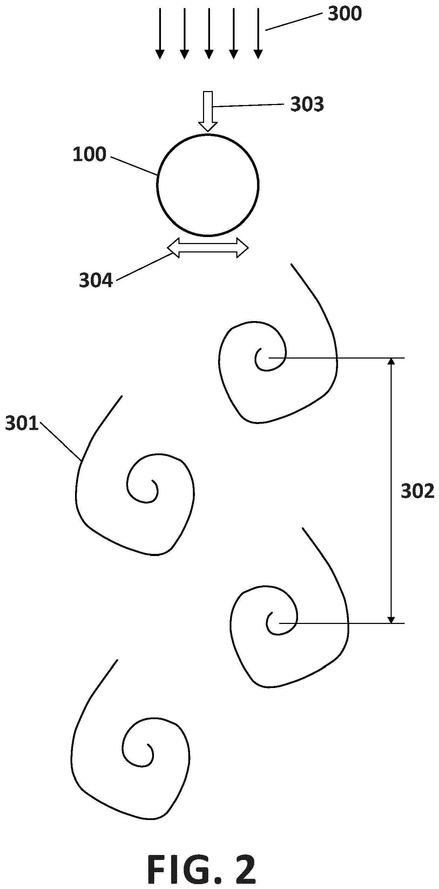

As shown in figure 2, the laminar flow 300 of the wind, upon impact with the capture element 100, produces a series of vortices 301 which occur alternatively on one side and the other of the capture element 100, and with a constant distance 302 between the successive vortices on each side of the capture element 100. Therefore, on the capture element 100 a drag force 303 is produced which is substantially constant in the direction of the wind, and a lift force 304 which is substantially perpendicular to the general direction of the wind and to the direction of the drag force. This lift force 304 periodically varies in sign, with a frequency marked by the appearance of the vortices, and this force makes the capture element 100 oscillate to one side and the other. In this embodiment of the invention, the capture element has a circular cross-section, in such a way that its function of capturing the energy of the wind does not depend on the direction of the wind, which can vary over time.

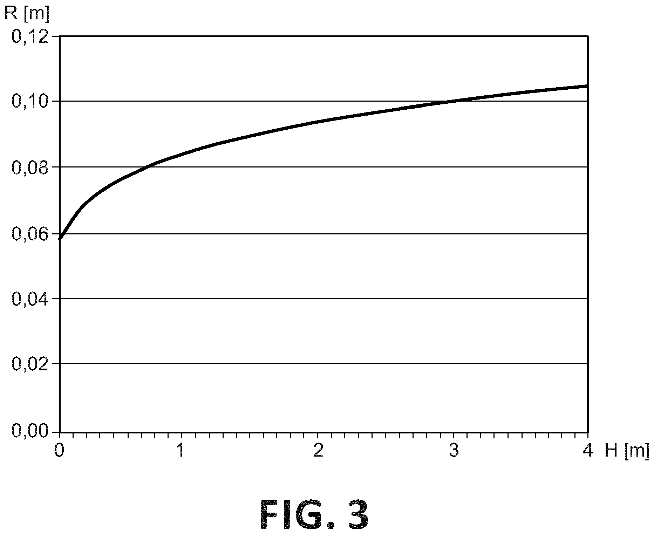

The frequency of the appearance of the vortices depends on the wind speed. Therefore, in order to maximise the energy capture of the capture element, it may be desirable for the vortices to appear in a synchronised manner throughout the capture element 100. Given that the wind speed, according to the Hellmann exponential Law, increases with height, and given that the frequency of the appearance of vortices depends on both the wind speed and on the characteristic dimension of the capture element (in this case, the diameter of the capture element), it is appropriate for the diameter of the capture element to increase with height, in a proportional manner to the increase in wind speed. Figure 3 illustrates schematically how, in the case of a capture element having a radius of approximately 60 mm at ground level, the radius increases to approximately 83 mm at the height of 1 metre above the ground, and to approximately 105 mm at a height of 4 metres above the ground. The ideal increase of the radius with height depends on the value of the Hellmann exponent and this exponent depends on the characteristics of the surroundings. In flat places, with ice or grass, its value is minimal and in very rough terrain or in cities, its value is higher.

At the same time, as is known, when a force of oscillation is applied to an element or object, the corresponding energy is absorbed better if the force that is applied oscillates at a frequency that corresponds to the natural oscillation frequency of the object in question. The natural frequency depends on parameters such as the density and rigidity of the element. For a capture element having a specific configuration and constitution, the frequency at which the vortices are generated and at which the lift force 304 oscillates, will depend on the wind speed. As indicated in WO-2012/017106-A1, it may be desirable to synchronise the natural oscillation frequency of the capture element with the frequency of the appearance of the vortices.

Patent document WO-2012/017106-A1 describes how the capture element is a pole consisting of elements having high electromechanical coupling, as is the case of piezoelectric elements. In a typical case that is disclosed in WO-2012/017106-A1, the required natural oscillation frequency of a pole of 4 metres in height may be of 8 Hz. Nonetheless, it is considered that piezoelectric elements generally do not convert mechanical energy into electrical energy in an efficient way at that frequency. In other words, if the pole described in WO-2012/017106-A1 oscillates to one side and the other at a frequency of approximately 8 Hz, the successive compressions and dilations of the piezoelectric elements occur at a relatively low frequency, unsuitable for optimising the efficiency of conversion from mechanical energy into electrical energy.

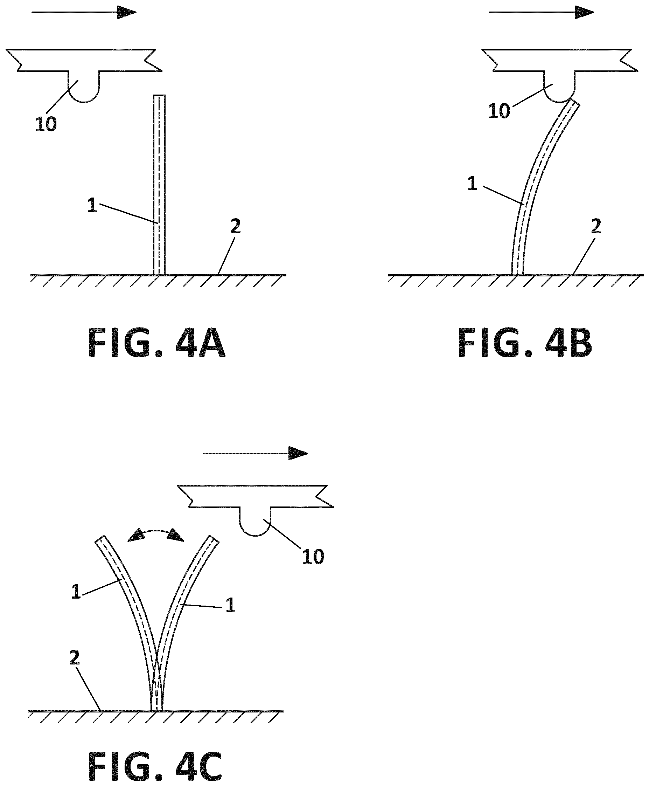

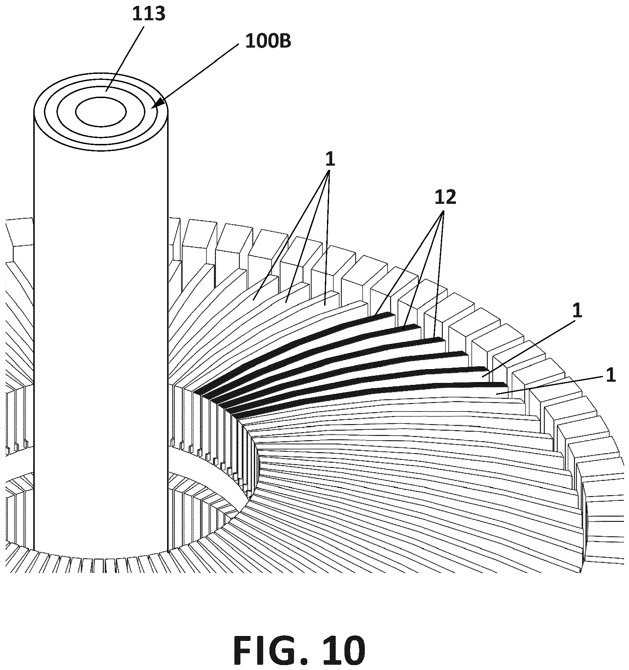

Figures 4A-4C illustrate schematically how according to a possible embodiment of the invention, the capture element 1 is associated to an actuator element 10 which is moved with part of the capture element, for example, in an oscillating manner, with the oscillation frequency of the capture element 100, for example, with a frequency of 8 Hz. At the same time, a generator piezoelectric element 1, in the shape of a sheet, plate, lever or cantilever, is coupled by one of its sides to a base 2, and when the actuator element 10 is moved (figure 4A), this actuator element 10 collides with the generator piezoelectric element 1, bending it (figure 4B). As it continues its movement, a moment arrives when the actuator element releases the generator piezoelectric element 1, whereupon the generator piezoelectric element 1 returns to its initial straight configuration, but does so oscillating at its natural oscillation frequency (figure 10C). During this phase, mechanical energy (elastic potential energy) is released which has accumulated in the generator piezoelectric element 1 during bending. The elastic potential energy is released to a great extent in the form of electrical energy, and given that this occurs with the generator piezoelectric element oscillating at its natural frequency, which can be in the order of kHz, this conversion of mechanical energy into electrical energy occurs with a high efficiency.

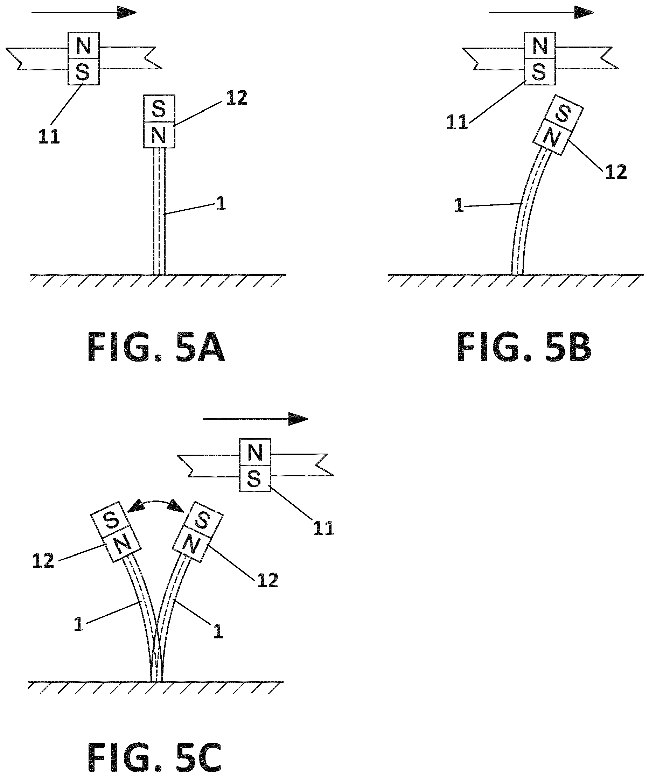

Although the configuration proposed in figures 4A-4C may be interesting, it may be preferable for there to be no contact and friction between the actuator element and the generator piezoelectric element 1. For this reason, in an alternative embodiment of the invention, part of which is schematically illustrated in figures 5A-5C, a first magnet 11 has been contemplated, which is connected or associated to the capture element 100 in such a way that it is moved according to the movement of the capture element, driven by the lift force 304. At the same time, at the free end of the generator piezoelectric element 1 (for example, in the shape of a plate, sheet, lever or cantilever), a second magnet 12 has been contemplated, with the two magnets being disposed in such a way that when the first magnet approaches the second magnet, a repulsion between the two magnets occurs giving rise to a displacement of the second magnet 12 which deforms the generator piezoelectric element 1, which passes from having a first configuration such as the one observed in figure 5A, to having a bent configuration, see figure 5B. In a similar manner to what has been illustrated in figure 4C, once the first magnet 11 surpasses a maximum bending position of the generator piezoelectric element 1, the elastic force that tends to return the generator piezoelectric element 1 to the configuration it had in figure 5A exceeds the force of repulsion between the magnets 11 and 12, and then the piezoelectric element is released and returns to its initial configuration, oscillating at its natural oscillation frequency, converting the elastic potential mechanical energy into electrical energy, with great efficiency. In this way, an oscillating movement of the first magnet 11 to one side and the other, with the frequency at which the capture element 100 oscillates, can give rise to an oscillation of the generator piezoelectric element 1 at a much higher frequency, increasing the efficiency of the conversion from mechanical energy into electrical energy, and without having to resort to complex multiplier mechanisms, etc.

One advantage of the use of magnets is that the friction between the actuator and the generator piezoelectric element can be avoided, which reduces wear and tear of the parts. This can be important to achieve an economically attractive product, given that maintenance costs can be substantially reduced.

In figures 5A-5C, the first magnet 11 and the second magnet 12 are disposed so that the poles of the same sign are opposite each other, producing repulsion between said magnets. It is also possible to operate with magnets by leaving the poles with different signs facing each other, operating with forces of attraction. It is also possible to operate based on interaction between a magnet and a piece of ferromagnetic material. However, operation based on repulsion between magnets, as schematically illustrated in figures 5A-5C, is believed to be beneficial for efficiency, maybe due to the repulsion that takes place when the generator ferromagnetic element is released and initiates its oscillaton: the repulsion at this stage can serve to boost the initial part of the movment during which electrical energy is released.

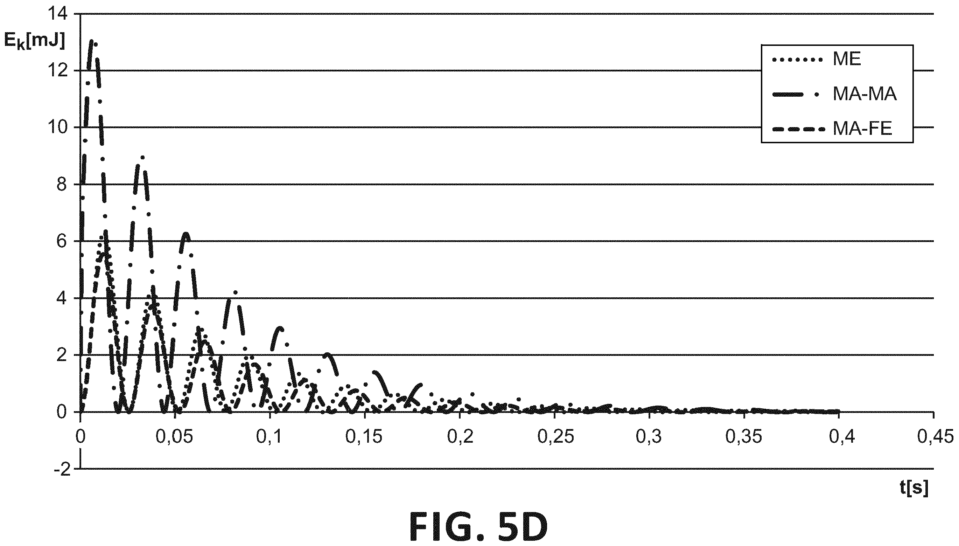

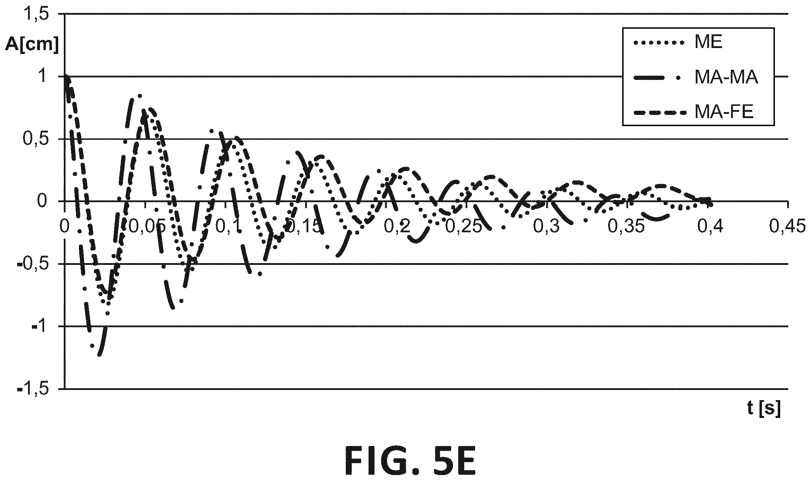

Simulations have been performed to verify this, and examples of the results are illustrated in figures 5D and 5E.

Figure 5D schematically illustrates how the kinetic energy of a piezoelectric cantilever evolves after deforming and releasing the cantilever, according to the principles of figures 4A-4C and 5A-5C. The vertical axis indicates the kinetic energy ($E_k$) in mJ and the horizontal axis the time (t) in seconds. The dotted graph represents that case in which the cantilever is triggered mechanically (ME), in line with what is illustrated in figures 4A-4C. The graph made up of lines or strokes of equal length represents the case in which the cantilever is triggered by the interaction between a magnet and a ferromagnetic material (MA-FE). The graph made up of lines or strokes alternating with dots represents the case in which the cantilever is triggered by the interaction by two magnets (MA-MA), by repulsion, according to the principle illustrated in figures 5A-5C. It can be observed how the triggering by interaction between magnets by repulsion provides for the highest levels of kinetic energy.

Figure 5E illustrates how the amplitude of the movement (A, in cm) of the piezoelectric cantilever evolves with time (t, in seconds). The dotted graph represents that case in which the cantilever is triggered mechanically (ME), in line with what is illustrated in figures 4A-4C. The graph made up of lines or strokes of equal length represents the case in which the cantilever is triggered by the interaction between a magnet and a ferromagnetic material (MA-FE). The graph made up of lines or strokes alternating with dots represents the case in which the cantilever is triggered by the interaction by two magnets (MA-MA), by repulsion, according to the principle illustrated in figures 5A-5C. The frequency of oscillation was found to be 40.302 Hz in the case of mechanical triggering (ME), 37.78 Hz in the case of triggering my interaction between a magnet and ferromagnetic material (MA-FE), and 42.82 Hz in the case of triggering by repulsion between magnets (MA-MA), according to the principles illustrated in figures 5A-5C. It can be observed how both the amplitude and the efficiency of the triggering are optimised when the triggering is produced by repulsion between magnets. It is believed that this may be due to the fact that the presence of a repulsing magnetic field accelerates the oscillating movement at the start thereof, with a force that is inversely proportional to the square of the distance between the magnets. This distance can be very small when the piezoelectric element is released, as schematically shown in figure 5B. Thus, this contributes to give an additional impulse to the movement of the generator piezoelectric element in the initial phase of its oscillation after being released. It is understood that this increased amplitude and frequency contribute to increased efficiency in the production of electrical energy.

In the embodiments illustrated in figures 4A-5C, the actuator elements such as the actuator elements 10 or the first magnets 11 are moved by the capture element and the generator piezoelectric elements are mounted on a fixed base, but any other suitable arrangement can be used within the scope of the invention, such as generator piezoelectric elements mounted to be displaced by the movement of the capture element, and actuator elements mounted on a fixed base. Also hybrids of these two kinds of embodiments can be used.

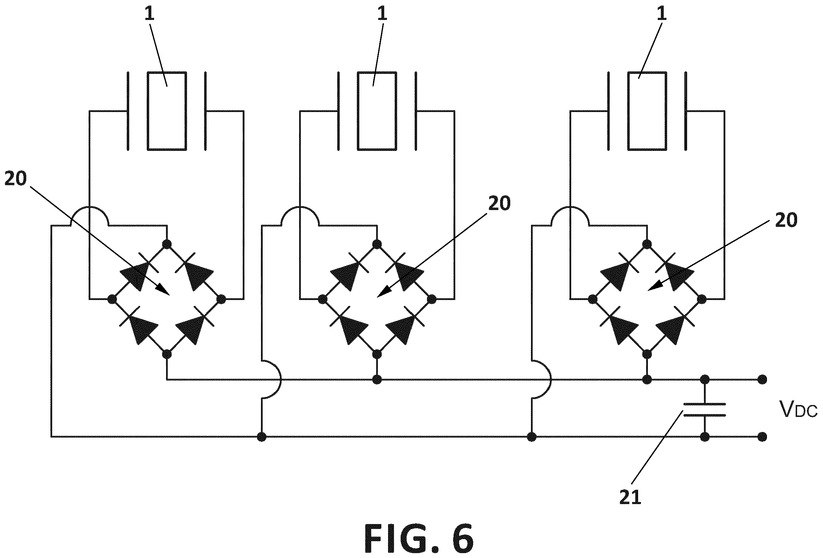

It is contemplated to have a large number of generator piezoelectric elements 1, which generally generate alternating current. Given that the generation of electrical energy in the different generator piezoelectric elements 1 is not always synchronised, it may be practical to use rectifiers, for example, based on sets 20 of diodes, as illustrated schematically in figure 6; a condenser 21 can be used to filter the output direct current signal.

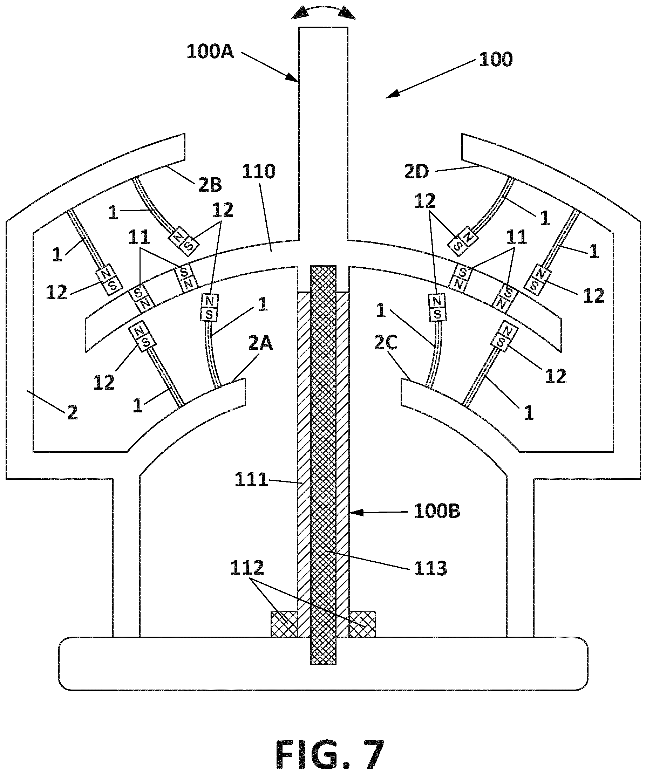

Figure 7 illustrates schematically several elements that form part of the lower part of the aerogenerator, according to a possible embodiment of the invention. A base 2 is observed which can be embedded in the anchoring base 101 (see figure 1) and which presents various internal curved surfaces 2A, 2B, 2C and 2D (surface 2A and 2B can be different surfaces or bases or form part of one single, for example substantially dome-shaped, surface or base; the same applies to surface 2C and 2D), on each one of which a plurality of piezoelectric elements are disposed in the form of a plate, sheet or cantilever, each one having one of its sides firmly anchored into the base 2, and with the opposite side free and provided with at least one second magnet 12. At the same time, the capture element 100 is provided with a lateral extension 110 in the form of a spherical cap, and on this lateral extension 110 first magnets 11 are disposed. When the capture element 100 inclines towards the sides driven by the lift force 304 (see figure 2), the first magnets 11 interact with the second magnets 12, in such a way that each time the capture element inclines to one side, the effect explained in relation to figures 5A-5C is produced, and the same occurs when the capture element returns to the neutral position, etc. In this way, with each cycle of oscillation of the capture element 100, the generator piezoelectric elements 1 can be triggered to oscillate, that is, be bent and released, several times, repetitively converting mechanical energy into electrical energy.

Figure 7 also illustrates schematically how the capture element 100, in an area close to its base or in its base, comprises an elastic core 113 surrounded by piezoelectric material 111. By applying voltage to the piezoelectric material 111, it is possible to modify the natural resonance frequency of the capture element assembly 100, adapting it to the frequency of appearance of vortices, so that in this way the capture of energy from the wind (or of the water, if the capture element is immersed in water) can be maximised. This piezoelectric material 111 can also generate electrical energy due to the deformations and pressures sustained during the oscillation of the capture element, but in this case the conversion is not very efficient due to the low frequency at which the capture element tends to oscillate. Consequently, the function of this piezoelectric material is principally that of adapting the natural oscillation frequency of the capture element 100 to the frequency at which the vortices are generated, in order to maximise the energy capture from the fluid. The conversion of this captured energy into electrical energy occurs principally by means of the generator piezoelectric elements 1, as has been explained. In order to act on the piezoelectric material 111 a control sub-system 104 can use oscillation data of the capture element 100 which is captured using sensors 112 attached to the base of the capture element, and/or information on the wind speed, which can be captured, for example, by means of external sensors (not shown). In this embodiment, the capture element can be considered to comprise two main parts, namely, a first part 100A and a second part 100B, said first part 100A being arranged so that said lift force acts on said first and said second part 100B being more flexible and/or more elastic than said first part and being arranged to connect said first part to a base. In this way, when said lift force acts on said capture element 100, said capture element sways with regard to said base. In some embodiments of the invention, a less costly material and/or design can be used for the first part than for said second part.

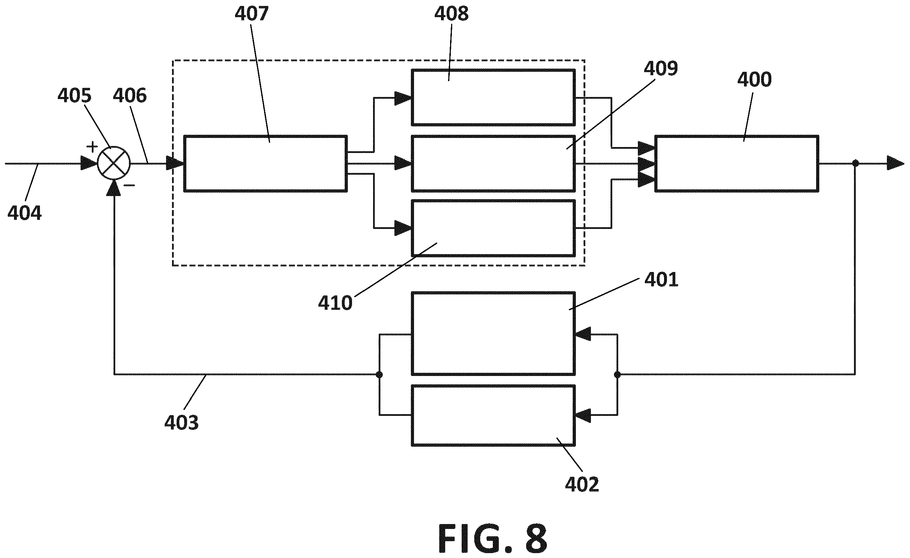

Figure 8 is an outline of part of a control system of a generator according to a possible embodiment of the invention. According to this embodiment of the invention, the status of a system 400 is taken into account which comprises the generator itself and which, additionally, can comprise external elements such as the wind. By means of internal sensors 401 factors such as the following ones can be determined or measured:

- the oscillation frequency of the capture element, and/or
- the position of the capture element, and/or
- the amplitude of the movement of the capture element,

and by means of external sensors 402 it is possible to measure, for example,

- the speed of the wind; and/or
- the direction of the wind.

Using the data obtained process values 403 are generated which are compared to reference values 404 in a comparer 405, thereby generating error data 406 that provide feedback to a control sub-system 407 which can act on

- a voltage regulation sub-system 408 regulating the voltage that is applied to the piezoelectric material 111 that forms part of the capture element, in order to modify the natural oscillation frequency of the capture element; and/or
- a voltage regulation sub-system 409 regulating the voltage that is applied to the generator piezoelectric elements 1; and/or
- a power regulation sub-system regulating the power that is extracted from the generator piezoelectric elements 1.

In this way, it is possible to act on several parameters of the electrical energy generator in order to optimise the generation of electrical energy according to the actual characteristics of the wind.

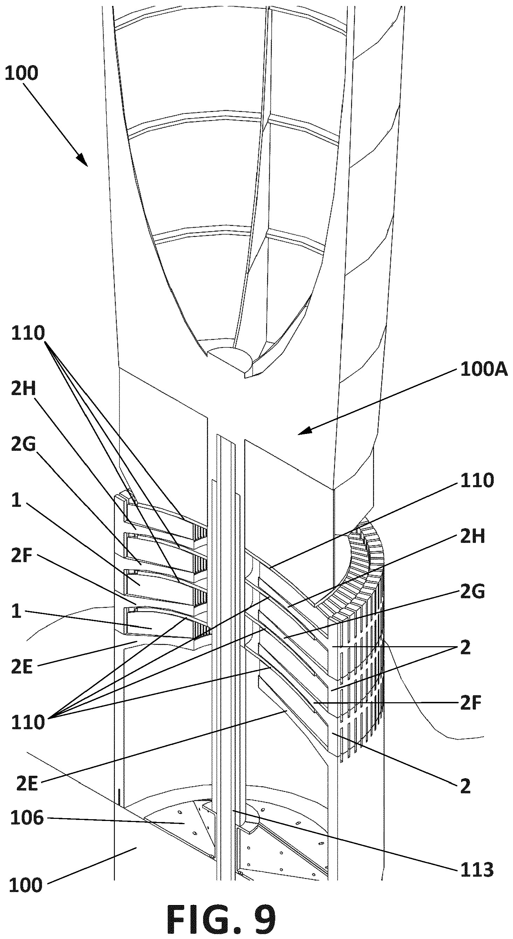

Figures 9-11 illustrate an embodiment of the invention in which the generator piezoelectric elements are distributed radially, that is, extending in the radial direction. Figure 9 illustrates how the generator piezoelectric elements 1 are placed on different support 2E, 2F, 2G and 2H, forming part of a fixed base 2 and distributed in the vertical direction, so that the generator piezoelectric elements are distributed axially, on several levels. On each level there is a plurality of substantially flat piezoelectric elements, arranged so that they extend in the radial direction, with regard to the axis of symmetry of the capture element 100. Each support 2E-2G features a central opening, in which a lower part 100B of the capture element 100 is accommodated, so that it can move or sway, as explained above. This lower part is relatively flexible, and supports an upper part 100A (only part of which is illustrated in figure 9), which makes up the major portion of the vertical extension of the capture element 100, and which can be more rigid and made of cheaper material or materials than the lower part 100B, so as to reduce the costs involved. The central openings in the supports are sufficiently large to accommodate for the movement of the capture element when it is swaying. The capture element is anchored to the base 100, and this anchoring is reinforced by anchoring member 106. Also in this embodiment, the lower part 100B of the capture element features an elastic core 113. In the illustrated embodiment, the free upper ends of the generator piezoelectric elements are curved, with a radius of curvature that increases with height (that is, the ones at a higher level, such as 2H, feature a larger radius of curvature than those at a lower level, such as 2E, in accordance with the radius of curvature of the path followed by the capture element at the corresponding level. On the other hand, the capture element 100 features dome-shaped lateral extensions 110, one such dome-shaped lateral extension being placed above each level of generator piezoelectric elements 1.

Figure 10 schematically illustrates how the generator piezoelectric elements 1 are placed so that they extend radially with regard to the lower part 100B of the capture element. As explained in relation to figures 5A-5C and 7, the generator piezoelectric 1 elements are provided with magnets at their free ends, some of these magnets 12 being schematically illustrated in figure 10, as a dark cover on the upper curved edge of the respective piezoelectric element 1. Generally, in this embodiment, all of the generator piezoelectric elements are provided with this kind of magnets. The magnets can be arranged to extend continuously along the corresponding edges of the generator piezoelectric elements, or they can be arranged only in certain positions.

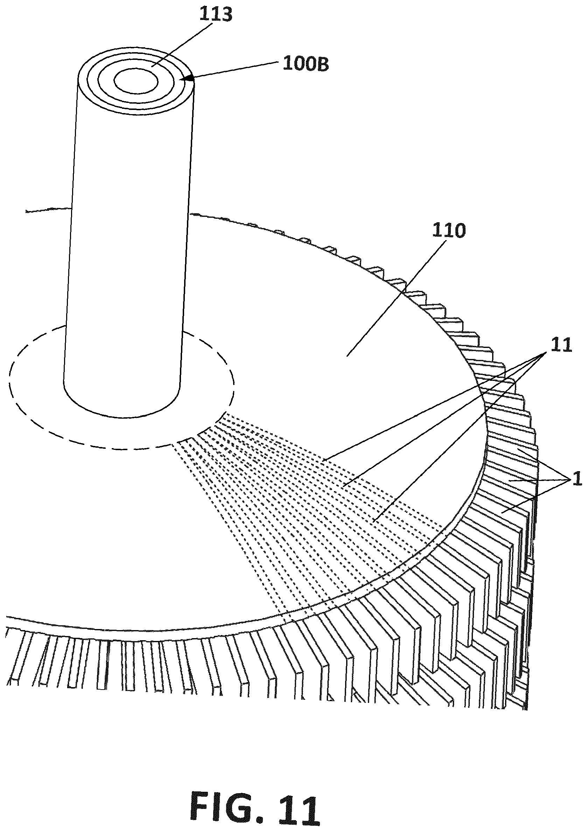

Figure 11 illustrates one of the dome-shaped extensions 110 that extend from the lower part 100B of the capture element, above the different levels of generator piezoelectric elements 1. The broken lines schematically illustrate some of the magnets 11 that are arranged to interact, such as by repulsion, with the magnets 12 attached to or forming part of the generator piezoelectric elements 1. It has been found that this kind of radial arrangement of the generator piezoelectric elements allows for a compact arrangement of the generator piezoelectric elements and also allows a large proportion of said generator piezoelectric elements 1 to be triggered by the movement of the capture element 100, as explained above, irrespective of the direction in which the wind is blowing.

Throughout this text, the word "comprises" and its variants (such as "comprising", etc.) must not be interpreted in an exclusive manner, in other words, do not exclude the possibility of what is described including other elements, steps, etc.

In this text, where reference is made to ranges, the end points are included, unless specified otherwise.

On the other hand, the invention is not limited to the specific embodiments described and also encompasses, for example, variants that can be embodied by the person skilled in the art (for example, with regard to the choice of materials, dimensions, components, configuration, etc.), within the scope of what is inferred from the claims.

**Claims**

1. An electrical energy generator, which comprises:

   a capture element (100) and, additionally, at least one generator element (1), wherein the capture element (100) is configured to be situated in a fluid and configured so that, when said fluid is moved, it generates vortices in said fluid in such a way that a lift force (304) is generated on said capture element (100); wherein said generator element is a generator piezoelectric element; wherein the capture element (100) is associated to the generator element (1) so that, when the generator is in a mode of electrical energy generation, the capture element (100), repetitively and in response to the lift force, actuates on the generator element (1) in such a way that said generator element (1) produces electrical energy;

   wherein the capture element (100) includes at least a first part (100A) and a second part (100B), said first part (100A) being arranged so that said lift force acts on said first part, said second part (100B) being more flexible than said first part and being arranged to connect said first part to a base so that when said lift force acts on said capture element (100), said capture element sways with regard to said base, wherein the second part is made of a different material or of different materials than the first part.

2. The electrical energy generator according to claim 1, wherein the capture element has a height of at least 1 metre and a natural oscillation frequency of between 0.01 Hz and 20 Hz.

3. The electrical energy generator according to any of the preceding claims, wherein the first part is substantially hollow.

4. The electrical energy generator according to any of the preceding claims, wherein the first part is larger than the second part.

5. A method of electrical energy generation, which comprises the steps of:

   placing a capture element (100) in a fluid in order to generate vortices in said fluid in such a way that a lift force (304) is generated on said capture element (100) which generates an oscillating movement of the capture element, in such a way that said oscillating movement of the capture element, repetitively

   (a) elastically deforms at least one generator piezoelectric element (1) in such a way that said generator piezoelectric element (1) passes from a first configuration to a second configuration, accumulating energy; and
   (b) subsequently, releases the generator piezoelectric element (1) in such a way that said generator piezoelectric element (1) returns to its first configuration in an oscillating manner, generating electrical energy.

6. The method according to claim 5, wherein magnets (11, 12) are used to convert the movement of the capture element into a deformation of the generator piezoelectric element (1).

7. The method according to any of claims 5 and 6, wherein:
   said, at least one, generator piezoelectric element (1) has a substantially flat configuration, with one side fixed in a base (2) and an opposite side free, in such a way that in order to deform the generator piezoelectric element (1) said free opposite side is moved, bending the generator piezoelectric element (1) in such a way that said generator piezoelectric element accumulates elastic potential energy.

8. The method according to any of claims 5-7, wherein the method comprises the step of adapting the natural oscillation frequency of the capture element to the frequency of appearance of the vortices in the fluid, through

- modifying a voltage applied to piezoelectric material (111) that forms part of the capture element (100), and/or
- modifying the electrical power that is extracted from said, at least one, generator piezoelectric element (1).

9. The method according to any of claims 5-8, wherein a capture element is used having a height of at least 1 metre and a natural oscillation frequency of between 0.01 Hz and 20 Hz.

10. The method according to any of claims 5-9, wherein when said capture element oscillates with a first frequency, said at least one piezoelectric element, after release in step (b), oscillates with a second frequency, higher than said first frequency.

**Patentansprüche**

1. Ein elektrischer Energiegenerator, der umfasst:

ein Erfassungselement (100) und, zusätzlich, mindestens ein Generatorelement (1), wobei das Erfassungselement (100) so konfiguriert ist, dass es sich in einer Flüssigkeit befindet und so konfiguriert ist, dass es, wenn die genannte Flüssigkeit bewegt wird, in der genannten Flüssigkeit in einer solchen Weise Wirbel erzeugt, das eine Auftriebskraft (304) auf das genannte Erfassungselement (100) erzeugt wird; wobei das genannte Generatorelement ein piezoelektrisches Generatorelement ist; wobei das Erfassungselement (100) so mit dem Generatorelement (1) verbunden ist, dass, wenn der Generator sich in einem Modus der Generierung elektrischer Energie befindet, das Erfassungselement (100), wiederholt und in Reaktion auf die Auftriebskraft, das Generatorelement (1) in einer solchen Weise ansteuert, dass das genannte Generatorelement (1) elektrische Energie produziert; wobei das Erfassungselement (100) mindestens einen ersten Teil (100A) und einen zweiten Teil (100B) beinhaltet, der genannte erste Teil so angeordnet, dass die genannte Auftriebskraft auf den ersten Teil einwirkt, der genannte zweite Teil flexibler als der genannte erste Teil und so angeordnet ist, dass er den genannten ersten Teil so mit einem Unterbau verbindet, dass wenn die Auftriebskraft auf das genannte Erfassungselement (100) einwirkt, das Erfassungselement hinsichtlich des genannten Unterbaus schwingt, wobei der zweite Teil aus einem unterschiedlichem Material oder unterschiedlichen Materialien als der erste Teil gefertigt ist.

2. Der elektrische Energiegenerator gemäß Anspruch 1, wobei das Erfassungselement eine Höhe von mindestens einem Meter und eine natürliche Oszillationsfrequenz von zwischen 0,01 Hz und 20 Hz aufweist.

3. Der elektrische Energiegenerator gemäß einem der vorhergehenden Ansprüche, wobei der erste Teil im wesentlichen hohl ist.

4. Der elektrische Energiegenerator gemäß einem der vorhergehenden Ansprüche, wobei der erste Teil größer als der zweite Teil ist.

5. Ein Verfahren zur Generierung elektrischer Energie, die die Schritte umfasst: Platzieren eines Erfassungselements (100) in einer Flüssigkeit, um in der genannten Flüssigkeit Wirbel in der Weise zu erzeugen, dass eine Auftriebskraft (304) auf das genannte Erfassungselement erzeugt wird, die eine oszillierende Bewegung des Erfassungselements in einer solchen Weise erzeugt, dass die genannte oszillierende Bewegung des Erfassungselements wiederholt

(a) mindestens ein piezoelektrisches Generatorelement (1) in einer solchen Weise verformt, dass das genannte piezoelektrische Generatorelement (1) von einer ersten Konfiguration in eine zweite Konfiguration übergeht, wobei Energie akkumuliert wird; und
(b) anschließend das piezoelektrische Generatorelement (1) so freigibt, dass das genannte piezoelektrische Generatorelement (1) in einer oszillierenden Weise in seine erste Konfiguration zurückkehrt, wobei elektrische Energie generiert wird.

6. Das Verfahren gemäß Anspruch 5, wobei Magnete (11, 12) verwendet werden, um die Bewegung des Erfassungselements in eine Deformation des piezoelektrischen Generatorelements (1) umzuwandeln.

**7.** Das Verfahren gemäß einem der Ansprüche 5 und 6, wobei:

das genannte, mindestens eine, piezoelektrisches Erfassungselement (1) eine im wesentlichen flache Anordnung aufweist, mit einer an einem Unterbau (2) befestigten Seite und einer gegenüberliegenden, in einer solchen Weise freien Seite, dass die genannte freie gegenüberliegende Seite bewegt wird, um das piezoelektrische Generatorelement (1) zu verformen, wobei das piezoelektrische Generatorelement (1) in einer solchen Weise gebogen wird, dass das genannte piezoelektrische Generatorelement elastische potentielle Energie akkumuliert.

**8.** Das Verfahren gemäß einem der Ansprüche 5 bis 7, wobei

das Verfahren den Schritt des Anpassens der natürlichen Oszillationsfrequenz des Erfassungselement an die Frequenz des Auftretens der Wirbel in der Flüssigkeit durch

- das Modifizieren einer an das piezoelektrische Material (111), das einen Teil des Erfassungselements (100) bildet, angelegten Spannung, und/oder
- das Modifizieren der elektrischen Energie, die aus dem genannten, mindestens einen, piezoelektrischen Generatorelement (1) extrahiert wird,

umfasst.

**9.** Das Verfahren gemäß einem der Ansprüche 5 bis 8, wobei

ein Erfassungselement verwendet wird, das eine Höhe von mindestens einem Meter und eine natürliche Oszillationsfrequenz von zwischen 0,01 Hz und 20 Hz aufweist.

**10.** Das Verfahren gemäß einem der Ansprüche 5 bis 9, wobei

wenn das genannte Erfassungselement mit einer ersten Frequenz oszilliert, das genannte mindestens eine piezoelektrische Element, nach der Freigabe in Schritt (b), mit einer zweiten Frequenz oszilliert, die höher als die genannte erste Frequenz ist.

**Revendications**

**1.** Générateur d'énergie électrique, comprenant :

un élément de capture (100) et, en plus, au moins un élément générateur (1), l'élément de capture (100) étant configuré pour être situé dans un fluide et étant configuré de telle sorte que, lorsque le fluide se déplace, l'élément de capture génère des tourbillons dans le fluide de telle manière qu'une force de sustentation (304) est générée sur l'élément de capture (100) ;

l'élément générateur étant un élément générateur piézoélectrique ;

l'élément de capture (100) étant associé à l'élément générateur (1) de telle sorte que, lorsque le générateur est dans un mode de production d'énergie électrique, l'élément de capture (100) agit sur l'élément générateur (1) de manière répétitive et en réponse à la force de sustentation, de telle sorte que l'élément générateur (1) produit de l'énergie électrique ;

l'élément de capture (100) comprenant au moins une première partie (100A) et une deuxième partie (100B), la première partie (100A) étant agencée de telle sorte que la force de sustentation agit sur ladite première partie, la deuxième partie (100B) étant plus flexible que la première partie et étant agencée pour relier la première partie à une base de telle sorte que lorsque la force de sustentation agit sur l'élément de capture (100), ledit élément de capture se balance par rapport à la base,

la deuxième partie étant réalisée en un matériau différent ou en des matériaux différents que la première partie.

**2.** Générateur d'énergie électrique selon la revendication 1, dans lequel l'élément de capture a une hauteur d'au moins 1 mètre et une fréquence d'oscillation naturelle comprise entre 0,01 Hz et 20 Hz.

**3.** Générateur d'énergie électrique selon l'une quelconque des revendications précédentes, dans lequel la première partie est sensiblement creuse.

**4.** Générateur d'énergie électrique selon l'une quelconque des revendications précédentes, dans lequel la première partie est plus large que la deuxième partie.

**5.** Procédé de production d'énergie électrique, qui comprend les étapes consistant à :

placer un élément de capture (100) dans un fluide afin de générer des tourbillons dans ledit fluide de telle sorte qu'une force de sustentation (304) soit générée sur l'élément de capture (100) laquelle génère un mouvement oscillant de l'élément de capture, de telle manière que le mouvement oscillant de l'élément de capture, de façon répétitive,

(a) déforme élastiquement au moins un élément générateur piézoélectrique (1) de telle sorte que ledit élément générateur piézoélectrique (1) passe d'une première configuration à une deuxième configuration, en accumulant de l'énergie ;

(b) puis libère l'élément générateur piézoélectrique (1) de telle sorte que ledit élément générateur piézoélectrique (1) retourne dans sa première configuration de manière oscillante, en générant de l'énergie électrique.

6. Procédé selon la revendication 5, dans lequel des aimants (11, 12) sont utilisés pour convertir le mouvement de l'élément de capture en une déformation de l'élément générateur piézoélectrique (1).

7. Procédé selon l'une quelconque des revendications 5 et 6, dans lequel
ledit au moins un élément générateur piézoélectrique (1) a une configuration sensiblement plate, avec un côté fixé à une base (2) et un côté opposé libre, de telle manière que, pour déformer l'élément générateur piézoélectrique (1), le côté opposé libre est déplacé en courbant l'élément générateur piézoélectrique (1) de telle sorte que ledit élément générateur piézoélectrique accumule de l'énergie potentielle élastique.

8. Procédé selon l'une quelconque des revendications 5 à 7, dans lequel
le procédé comprend l'étape consistant à adapter la fréquence d'oscillation naturelle de l'élément de capture à la fréquence d'apparition des tourbillons dans le fluide

- en modifiant une tension appliquée au matériau piézoélectrique (111) qui fait partie de l'élément de capture (100), et/ou
- en modifiant la puissance électrique qui est extraite du au moins un élément générateur piézoélectrique (1).

9. Procédé selon l'une quelconque des revendications 5 à 8, dans lequel
un élément de capture est utilisé qui a une hauteur d'au moins 1 mètre et une fréquence d'oscillation naturelle comprise entre 0,01 Hz et 20 Hz .

10. Procédé selon l'une quelconque des revendications 5 à 9, dans lequel,
lorsque l'élément de capture oscille avec une première fréquence, l'au moins un élément piézoélectrique, après libération à l'étape (b), oscille avec une seconde fréquence supérieure à la première fréquence.

EP 2 965 417 B1

**FIG. 1**

**FIG. 2**

**FIG. 3**

**FIG. 4A**

**FIG. 4B**

**FIG. 4C**

**FIG. 5A**

**FIG. 5B**

**FIG. 5C**

FIG. 5D

FIG. 5E

**FIG. 6**

FIG. 7

FIG. 8

EP 2 965 417 B1

**FIG. 9**

**FIG. 10**

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2922607 A1
- JP 2006132397 A
- JP 2006226221 A
- WO 2012017106 A1
- EP 2602483 A1
- US 2008048455 A1
- WO 2012066550 A1
- CN 201818437 U
- JP 2006158113 A
- JP 2006132397A A
- WO 2007071975 A1